# FASCICULE DE BREVET EUROPEEN

(11) **EP 0 723 889 B1**
(45) Date de publication et mention de la délivrance du brevet: **29.07.1998**
(21) Numéro de dépôt: 96400193.7
(22) Date de dépôt: 26.01.1996
(51) Int. Cl.: B60N 2/12

(54) **Glissière pour sièges de véhicules**
Fahrzeugsitzgleitschiene
Vehicle seat slide

(30) Priorité: 30.01.1995 FR 9501023
(43) Date de publication de la demande: 31.07.1996
(73) Titulaire: BERTRAND FAURE EQUIPEMENTS S.A., 92100 Boulogne (FR)
(72) Inventeur: Reubeuze, Yann, F-61100 Landigou (FR); Fretel, Jean-Marie, F-50850 Ger (FR)
(74) Mandataire: Burbaud, Eric

(56) Documents cités:
- EP-A- 0 135 596
- EP-A- 0 196 773
- EP-A- 0 589 759
- DE-A- 2 708 423
- FR-A- 2 449 549
- US-A- 4 881 774
- US-A- 5 100 092

## Description

L'invention est relative aux glissières pour sièges de véhicules, c'est-à-dire aux dispositifs permettant de régler les positions longitudinales, ou "en avance et recul", desdits sièges, ainsi qu'aux sièges équipés de telles glissières.

Elle vise plus particulièrement le cas où lesdites glissières comportent un mécanisme de mémoire, c'est-à-dire rendent possible un déplacement de va-et-vient longitudinal de grande amplitude du siège à partir d'une position arrière préréglée avec possibilité de retour automatique en cette position préréglée à la fin dudit déplacement.

De telles glissières équipent notamment les véhicules présentant uniquement deux portes latérales et comprenant des places arrière en plus des places avant correspondant aux sièges ici considérés : l'accessibilité à une telle place arrière est rendue possible par la combinaison d'un déplacement vers l'avant du siège avant correspondant et d'un rabattement vers l'avant du dossier de ce siège.

D'une façon connue en soi, les glissières du genre en question auxquelles l'invention se rapporte comprennent : un profilé longitudinal fixe, c'est-à-dire destiné à être fixé au plancher du véhicule ; un profilé longitudinal mobile monté coulissant sur le profilé fixe et destiné à supporter le siège ; une suite de crans portés par le profilé fixe ; un verrou monté pivotant autour d'un premier axe horizontal transversal lié au profilé mobile et propre à coopérer avec les crans du profilé fixe sous la commande d'un organe facilement accessible de la personne assise sur le siège ; des moyens élastiques pour solliciter constamment le verrou vers la position crantée de verrouillage ; une barrette crantée longitudinale solidaire du profilé fixe ; un patin monté coulissant le long de la barrette ; un loquet de blocage du patin monté pivotant autour d'un second axe horizontal transversal lié au patin et propre à coopérer ou non avec les crans de la barrette de façon à bloquer ou non le patin sur la barrette, ledit loquet comprenant supérieurement un bec ouvert horizontalement vers l'avant du siège ; un basculeur monté pivotant autour d'un troisième axe horizontal transversal lié au profilé mobile, basculeur comprenant un premier doigt transversal agencé de façon à coopérer avec l'extrémité arrière du patin, un second doigt transversal propre à coopérer avec le bec du loquet et un talon propre à coopérer avec le verrou ; et des moyens élastiques pour solliciter constamment le basculeur dans un premier sens vers une première position angulaire extrême pour laquelle, d'une part, le premier doigt se trouve en une position basse d'entraînement horizontal du patin, d'autre part, le second doigt relève le bec du loquet de blocage du patin en sa position de déblocage, et enfin, le talon permet au verrou de coopérer avec ses crans.

Lorsque le basculeur se trouve en cette première position angulaire extrême, son premier doigt transversal et une butée du verrou chevauchent longitudinalement l'ensemble de mémorisation constitué par le patin et son loquet, lequel se trouve alors en sa position de déblocage : en d'autres termes, le profilé mobile est alors longitudinalement lié à cet ensemble et peut se déplacer avec lui.

Les commandes normales du verrou par l'usager, commandes qui sont possibles pour cette position angulaire extrême du basculeur, permettent alors de régler la position longitudinale du siège, en entraînant avec lui l'ensemble de mémorisation.

Quand au contraire le basculeur est placé -à l'aide de moyens sur lesquels on reviendra plus loin- dans son autre position angulaire extrême,
- le verrou est maintenu dégagé hors de ses crans,
- le loquet bloque le patin en une position déterminée de mémorisation le long de la barrette crantée,
- et le profilé mobile est libre de se déplacer par rapport à l'ensemble constitué par cette barrette, le patin et son loquet.

Cette triple caractéristique rend possible un déplacement longitudinal de va-et-vient de grande amplitude du profilé mobile par rapport au profilé fixe, à partir d'une position arrière préréglée, avec un retour final de ce profilé mobile en sa position préréglée, retour qui est suivi d'un nouveau crantage longitudinal dû au retour consécutif du basculeur en sa première position angulaire extrême.

De telles glissières donnent généralement satisfaction.

Mais les modes de réalisation connus desdites glissières (voir le document FR-A-2 449 549) présentent encore quelques inconvénients tels que les suivants :
- le retour du verrou en une position crantée implique le retour du basculeur en sa première position angulaire extrême, laquelle ne peut être retrouvée que lorsque ce basculeur se retrouve en sa position longitudinale initiale pour laquelle son premier doigt peut à nouveau s'abaisser derrière le patin : un tel retour longitudinal implique l'absence totale d'obstacle juste à l'arrière du siège considéré et, si un tel obstacle existe, tel qu'un bagage ou que le pied d'un passager arrière, le nouveau crantage de la glissière n'est plus possible,
- les commandes du basculeur sont assurées à l'aide de poignées de manoeuvre spéciales qui sont liées par des tringleries au mécanisme d'articulation du dossier : les rabattements du dossier ne dispensent donc pas l'usager de manoeuvrer lesdites poignées.

L'invention a pour but, surtout, de remédier à ces derniers inconvénients.

A cet effet, une glissière du genre ci-dessus selon l'invention est essentiellement caractérisée en ce qu'elle comprend en outre des moyens pour asservir au rabattement du dossier du siège vers l'avant une sollicitation angulaire du basculeur dans le sens inverse du premier sens défini ci-dessus et en ce que la portion arrière de son patin propre à coopérer avec le premier doigt du basculeur présente, selon un plan vertical longitudinal, un profil en V ouvert vers le bas délimité à l'arrière par une tranche verticale ou descendant vers l'avant et à l'avant par une rampe oblique descendant vers l'avant.

Dans des modes de réalisation préférés, on a recours en outre à l'une et/ou à l'autre des dispositions suivantes :
- les moyens d'asservissement des déplacements angulaires du basculeur aux rabattements du dossier comprennent un câble inextensible dont les deux extrémités sont accrochées respectivement à ce basculeur et à ce dossier,
- des moyens élastiques sont prévus pour solliciter angulairement le dossier du siège vers sa position angulairement rabattue vers l'avant, et ces moyens sont associés au mécanisme d'articulation du dossier de façon à intervenir uniquement lors des débrayages de ce mécanisme.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

Les figures 1 et 2, de ces dessins, montrent très schématiquement les différentes positions relatives susceptibles d'être occupées par l'assise et le dossier d'un siège de véhicule équipé d'une glissière selon l'invention, lors d'un cycle de manoeuvres exécuté pour accéder à une place arrière.

La figure 3 montre schématiquement en partie une telle glissière dans son état correspondant à un déplacement de va-et-vient de grande amplitude du siège en avant de sa position arrière préréglée, avec son dossier rabattu vers l'avant.

Les figures 4, 5, 6 et 7 montrent semblablement la même glissière dans respectivement ses états correspondant :
- au retour du siège en une position longitudinale arrière mémorisée avec début de pivotement du basculeur,
- au retour du basculeur en sa position angulaire extrême correspondant à un fonctionnement normal,
- au déverrouillage normal de la glissière pour un réglage longitudinal du siège entraînant avec lui ses moyens de mémorisation,
- et au crantage du siège en une position intermédiaire autre que celle déterminée par les moyens de mémorisation.

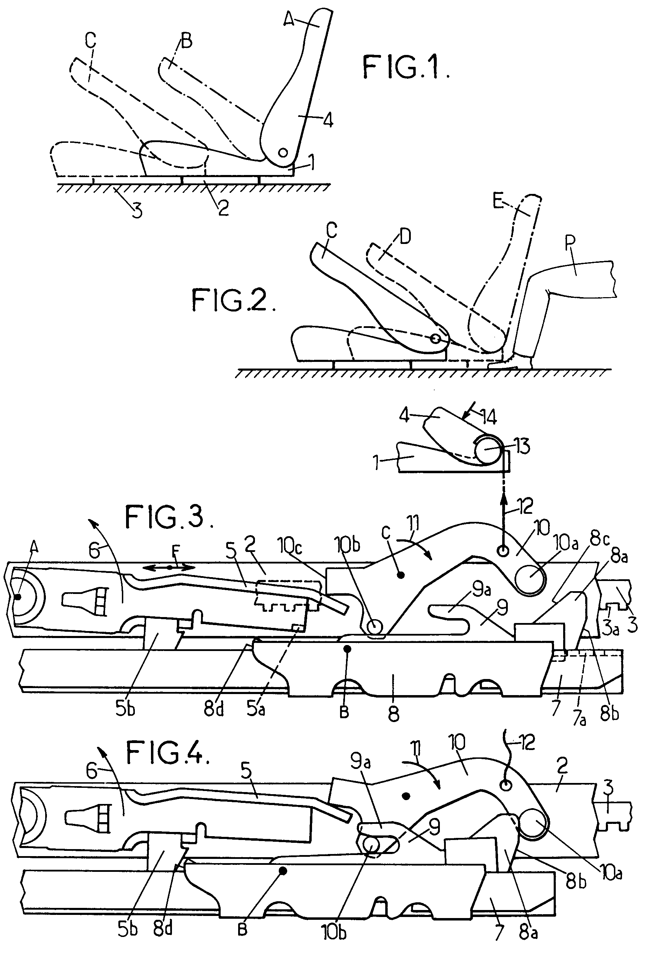

Sur les figures 1 et 2, on voit très schématiquement un siège de véhicule comprenant une assise 1 montée sur un profilé mobile 2 lui-même monté longitudinalement coulissant sur un profilé fixe 3, assise sur l'arrière de laquelle est articulé un dossier 4.

Les cinq positions A, B, C, D et E représentées sur ces figures 1 et 2 correspondent à celles qui se succèdent lors de l'accès d'un passager P à une place disposée à l'arrière du siège considéré, siège supposé occuper une place avant d'un véhicule dit "trois portes", c'est-à-dire comprenant seulement deux portes latérales.

Initialement, le siège en question occupe la position A (figure 1).

A partir de cette position A, on rabat le dossier 4 vers l'avant, en la position B, puis on repousse le siège, avec son dossier ainsi rabattu, jusqu'à une position extrême avant C.

Le passager P s'installe alors à la place arrière, puis il recule le siège, avec son dossier toujours rabattu, de la position C à la position D.

Cette position D peut être identique à la position B précédente si le recul du siège n'est pas entravé par un obstacle tel qu'un bagage ou que le pied ou la jambe du passager arrière.

Ce n'est pas le cas schématisé sur la figure 2, pour lequel la position D est un peu moins reculée que la position B ci-dessus.

On ne peut plus alors retrouver la position arrière préréglée du siège, position qui aurait pu être retrouvée exactement en l'absence d'obstacle en raison de la prévision de moyens de mémorisation connus en soi.

Avec les glissières de l'art antérieur, l'empêchement signalé se traduit par une impossibilité d'obtenir à nouveau un crantage de sécurité entre les deux profilés 2 et 3.

Comme on le verra plus loin, un tel crantage est ici obtenu par simple redressement du dossier jusqu'en sa position E (figure 2).

Plus précisément, la glissière qui permet le réglage longitudinal du siège comprend, en plus du profilé fixe 3 comportant une série de crans inférieurs 3a et destiné à être fixé au plancher du véhicule et du profilé mobile 2 monté longitudinalement coulissant, notamment avec interposition de billes (non représentées), sur le profilé fixe 3 et destiné à supporter le siège,
- un verrou 5 monté pivotant autour d'un premier axe horizontal transversal A lié au profilé mobile 2 et présentant au moins une dent 5a ou analogue propre à coopérer avec les crans 3a sous la commande d'un organe facilement accessible de la personne assise sur le siège, organe tel qu'un arceau (non représenté) s'étendant transversalement sous la portion avant de l'assise du siège, arceau solidarisé avec ledit verrou 5,
- un ressort schématisé par la flèche 6 propre à solliciter constamment le verrou 5 vers sa position angulaire de verrouillage pour laquelle la dent 5a est introduite dans l'un des crans 3a,
- une barrette longitudinale 7 crantée en 7a et solidaire du profilé fixe 3,
- un patin 8 monté coulissant le long de la barrette 7 et chevauchant celle-ci,
- un loquet 9 de blocage du patin 8, loquet monté pivotant autour d'un second axe horizontal B lié au patin et agencé de façon à pouvoir occuper deux positions extrêmes correspondant respectivement à une liberté de coulissement du patin le long de la barrette et à un blocage de ce coulissement, ledit loquet comprenant supérieurement un bec 9a ouvert horizontalement vers l'avant du siège,
- un basculeur 10 monté pivotant autour d'un troisième axe horizontal transversal C lié au profilé mobile 2, ce basculeur comprenant un premier pion ou doigt transversal arrière 10a agencé de façon à coopérer avec l'extrémité arrière du patin 8, un second doigt ou pion inférieur 10b propre à coopérer avec le bec 9a et un talon 10c propre à coopérer avec le verrou 5,
- et un ressort schématisé par la flèche 11 sollicitant constamment le basculeur 10 dans un premier sens, autour de l'axe C, vers sa position angulaire extrême pour laquelle le premier doigt 10a se trouve en position basse d'entraînement horizontal du patin 8, derrière ce patin, le second doigt 10b coopère avec le bec 9a de façon à relever le loquet 9 en sa position de déblocage du patin 8 par rapport à la barrette 7, et le talon 10c se trouve suffisamment au-dessus du verrou 5 pour rendre possible son verrouillage.

En outre, un câble inextensible 12 est accroché sur le basculeur 10 de façon à le solliciter angulairement autour de l'axe C en sens inverse du ressort 11.

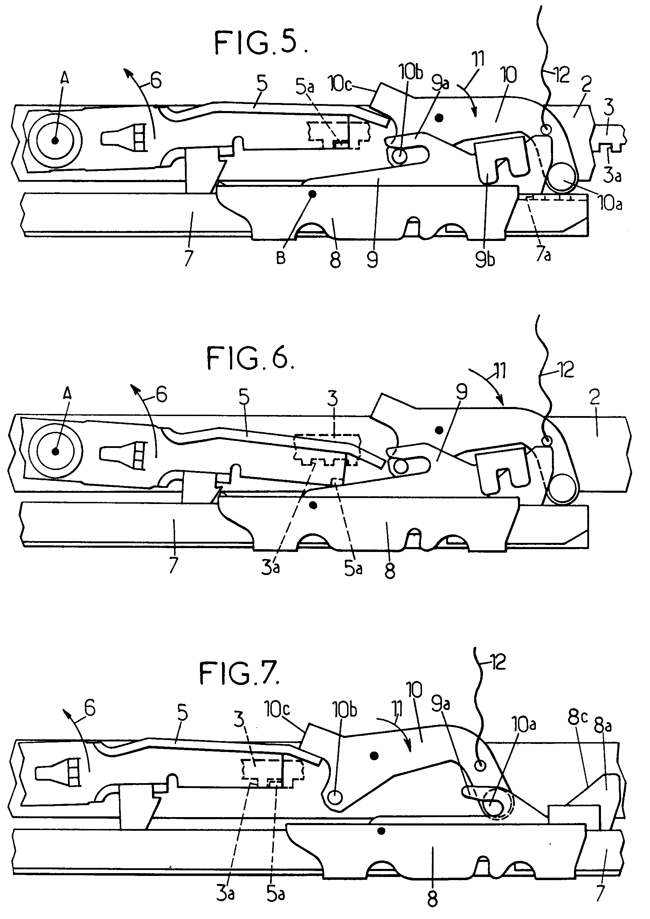

Ce câble 12 est accroché sur le dossier 4 de telle façon qu'il soit tendu verticalement lorsque ce dossier est rabattu vers l'avant (voir figure 3) et au contraire détendu lorsque ledit dossier se trouve en une position normale redressée (figures 4 à 7). A cet effet, son extrémité opposée à celle qui est accrochée sur le basculeur 10 est avantageusement accrochée sur l'extrémité d'une portée 13 incurvée circulairement liée au dossier 4 et centrée sur l'axe d'articulation de celui-ci.

En outre, l'extrémité arrière ou queue 8a du patin 8 contre laquelle vient buter horizontalement le doigt 10a en sa position basse arrière, présente, selon un plan vertical longitudinal, la forme générale d'un V renversé ou plus précisément celle de l'élément central supérieur d'une queue d'avion : son bord arrière 8b comprend un segment supérieur vertical raccordé à un segment légèrement incliné sur la verticale descendant vers l'avant et son bord antérieur 8c forme une rampe plane oblique descendant vers l'avant et inclinée d'environ 45° sur la verticale.

Le fonctionnement de l'ensemble ainsi décrit est le suivant.

Dans son état initial schématisé sur la figure 3, on suppose le câble 12 tendu, de sorte que le basculeur 10 se trouve en sa position angulaire extrême orientée selon le sens anti-horaire autour de l'axe C.

Pour cet état, le doigt 10a se trouve en une position haute dégagée de la queue 8a, le doigt 10b se trouve en une position basse pour laquelle il ne relève pas le loquet 9, ce qui a pour effet de bloquer le patin 8 sur la barrette 7, et le talon 10c prend appui verticalement contre l'extrémité du verrou 5, ce qui maintient ce dernier dégagé des crans 3a.

En d'autres termes, le profilé mobile 2 est libre de se déplacer longitudinalement le long du profilé fixe 3 tout en laissant en une place bien définie l'ensemble de mémorisation constitué par le patin 8 et son loquet 9.

Cette liberté de déplacement longitudinal du profilé 2 est symbolisée par la double flèche F.

C'est pour cet état que le siège peut effectuer un déplacement de va-et-vient de grande amplitude correspondant au passage de la position B à la position C ci-dessus et de la position C à la position D.

Si, à partir de cet état de la figure 3, on désire replacer la glissière en une position arrière crantée de sécurité, deux solutions se présentent selon que l'on peut reculer le siège jusqu'à sa position préréglée B (figure 1) ou qu'au contraire on est obligé d'interrompre ce recul en une position plus avancée D (figure 2), en raison de la présence provisoire d'un obstacle P derrière le siège.

Dans la première hypothèse, le recul complet du siège est limité par le contact d'une portée 5b solidaire du verrou contre le bord avant 8d du patin 8, contact qui définit la position longitudinale préréglée du siège (figure 4).

Au cours du recul qui se termine par ce contact, le dossier est demeuré rabattu vers l'avant, de sorte que le câble 12 est resté tendu : ce maintien du dossier en position rabattue est de préférence assuré par un ressort approprié, schématisé par la flèche 14, dont l'intervention est libérée dès neutralisation d'un verrou d'articulation approprié (non représenté).

Dès que le contact défini ci-dessus est établi, on redresse le dossier 4 à l'encontre de la force de rappel du ressort 14, ce qui a pour effet de relâcher le câble 12.

Dès lors, la sollicitation élastique exercée par le ressort 11 sur le basculeur 10 fait basculer ce dernier dans le sens horaire (figures 4 et 5), ce qui entraîne les trois conséquences suivantes :
- le doigt 10a s'abaisse derrière la queue 8a en longeant jointivement son bord arrière 8b,
- le doigt 10b qui, à la fin du recul du profilé 2, a pénétré dans le bec 9a du loquet 9, soulève ce dernier loquet autour de l'axe B, du fait de son accrochage sur ledit bec : comme visible sur la figure 5, ce soulèvement a pour effet de dégager le loquet 9, et plus précisément au moins une dent 9b prévue à l'arrière de ce loquet, du crantage 7a de la barrette 7, ce qui désolidarise le patin 8 de cette barrette en rendant possibles ses coulissements longitudinaux le long de celle-ci,
- le talon 10c s'écarte verticalement de l'extrémité arrière du verrou 5 en rendant possible la pénétration de la dent 5a ou analogue de ce verrou dans le crantage 3a du profilé fixe 3.

L'état résultant, visible sur la figure 5, correspond à un crantage normal de la glissière.

A partir de cet état, les réglages longitudinaux du siège peuvent être assurés de façon classique en soulevant l'arceau de commande du verrou 5, ce qui déplace angulairement ce verrou 5 vers le bas autour de l'axe A à l'encontre du rappel du ressort 6, en dégageant sa dent 5a ou analogue du crantage 3a (figure 6) : après un tel dégagement, on peut déplacer l'ensemble du profilé mobile 2 et de tout l'équipage qui en est longitudinalement solidaire, y compris l'ensemble de mémorisation constitué par le patin 8 et le loquet 9, le long de l'ensemble de guidage constitué par le profil fixe 3 et la barrette 7.

Dès que la nouvelle position angulaire désirée est atteinte, il suffit de lâcher l'arceau de commande du verrou 5 pour obtenir, par l'effet de rappel du ressort 6, un nouveau verrouillage longitudinal du siège, par nouvelle introduction de la dent 5a du verrou 5 dans l'un des crans 3a du profilé 3.

Après ce réglage longitudinal, l'ensemble de mémorisation 8-9 est à nouveau prêt à jouer son rôle puisqu'il a suivi le profilé mobile 2 dans son déplacement.

Dans la seconde hypothèse évoquée ci-dessus, selon laquelle le recul du profilé mobile, après un déplacement vers l'avant de grande amplitude tel que signalé ci-dessus, ne peut pas être effectué jusqu'à la position arrière préréglée, en raison de la présence d'un obstacle à l'arrière du siège, il est encore possible ici d'assurer un crantage de sécurité.

Il suffit en effet ici à nouveau de redresser le dossier 4 pour ladite position incomplètement reculée correspondant à celle schématisée en E sur la figure 2.

En effet, le relâchement du câble 12 qui en résulte a pour effet automatiquement de faire pivoter le basculeur 10 dans le sens horaire sous l'effet du ressort 11, comme précédemment (figure 7).

Lors de ce pivotement :
- le doigt 10a peut à nouveau occuper une position aussi basse que sur la figure 5 si, bien entendu, il ne se trouve pas verticalement en regard de la queue 8a du patin 8 (il est à noter que ledit doigt 10a est suffisamment décalé par rapport au loquet 9, selon la direction "transversale" perpendiculaire à la direction longitudinale du siège, pour que ce loquet 9 ne s'oppose pas à l'abaissement de ce doigt 10a),
- le doigt 10b ne relève plus le bec 9a, puisqu'il se trouve en avant de ce bec, de sorte que l'ensemble de mémorisation 8-9 est maintenu en place,
- et le talon 10c libère comme précédemment le verrou 5 en rendant possible l'introduction de sa dent 5a dans un cran 3a du profilé fixe 3.

Le crantage de sécurité du siège est donc encore réalisé, même s'il n'est pas effectué en la position arrière longitudinale préréglée.

Cette position préréglée peut ensuite être à nouveau très facilement atteinte, dès que l'obstacle P disposé à l'arrière du siège a été supprimé.

Il n'est pas nécessaire à cet effet d'exercer une traction sur le câble 12 en rabattant à nouveau le dossier vers l'avant.

En effet, lors du simple recul du siège consécutif au dégagement du verrou 5, la coopération du doigt 10a avec la rampe avant 8c de la queue 8a du patin a pour effet de faire pivoter le basculeur 10 dans le sens anti-horaire, exactement comme l'aurait fait une traction sur le câble 12, ce qui assure d'une part une réintroduction du doigt 10b dans le bec 9a et d'autre part un dépassement par le doigt 10a du sommet de la queue 8a, la détente consécutive du ressort 11 dès dépassement dudit sommet ayant pour effet de rétablir le basculeur 11 en sa position angulaire extrême selon le sens horaire telle qu'illustrée sur la figure 5, pour laquelle l'ensemble de mémorisation est à nouveau chevauché de manière quasi-jointive par l'ensemble des deux éléments 5b et 10a et prêt à nouveau à coulisser le long de la barrette 7 du fait du passage du loquet 9 en sa position de déblocage.

En suite de quoi, et quel que soit le mode de réalisation adopté, on dispose finalement d'une glissière dont la constitution et le fonctionnement résultent suffisamment de ce qui précède.

Cette glissière présente par rapport à celles antérieurement connues un certain nombre d'avantages, et en particulier les suivants :
- elle rend possible un crantage de sécurité longitudinal du siège, après un déplacement de grande amplitude de celui-ci vers l'avant, même si, lors de son retour vers l'arrière, la position préréglée ne peut pas être atteinte provisoirement, et ce sans que soit supprimée pour autant la possibilité de retrouver ladite position préréglée dès que l'obstacle qui s'opposait à un recul suffisant du siège à lui-même était supprimé,
- la commande du mécanisme est extrêmement simple, puisqu'elle ne fait plus appel à des poignées spéciales, cette commande étant automatiquement assurée par les simples rabattements du dossier.

## Revendications

1. Glissière pour siège de véhicule, comprenant : un profilé longitudinal fixe (3) ; un profilé longitudinal mobile (2) monté coulissant sur le profilé fixe ; une suite de crans (3a) portés par le profilé fixe ; un verrou (5) monté pivotant autour d'un premier axe horizontal transversal (A) lié au profilé mobile et propre à coopérer avec les crans du profilé fixe sous la commande d'un organe facilement accessible de la personne assise sur le siège ; des moyens élastiques (6) pour solliciter constamment le verrou vers la position crantée de verrouillage ; une barrette crantée longitudinale (7) solidaire du profilé fixe ; un patin (8) monté coulissant le long de la barrette ; un loquet (9) de blocage du patin monté pivotant autour d'un second axe horizontal transversal (B) lié au patin et propre à coopérer ou non avec les crans (7a) de la barrette de façon à bloquer ou non le patin sur la barrette, ledit loquet comprenant supérieurement un bec (9a) ouvert horizontalement vers l'avant du siège ; un basculeur (10) monté pivotant autour d'un troisième axe horizontal transversal (C) lié au profilé mobile, basculeur comprenant un premier doigt transversal (10a) agencé de façon à coopérer avec l'extrémité arrière (8a) du patin, un second doigt transversal (10b) propre à coopérer avec le bec du loquet et un talon (10c) propre à coopérer avec le verrou ; et des moyens élastiques (11) pour solliciter constamment le basculeur dans un premier sens vers une première position angulaire extrême pour laquelle, d'une part, le premier doigt (10a) se trouve en une position basse d'entraînement horizontal du patin, d'autre part, le second doigt (10b) relève le bec du loquet de blocage du patin en sa position de déblocage, et enfin le talon (10c) permet au verrou de coopérer avec ses crans, caractérisée en ce qu'elle comprend en outre des moyens (12) pour asservir au rabattement du dossier (4) du siège vers l'avant une sollicitation angulaire du basculeur (10) dans le sens inverse du premier sens défini ci-dessus et en ce que la portion arrière (8a) de son patin (8) propre à coopérer avec le premier doigt (10a) du basculeur présente, selon un plan vertical longitudinal, un profil en V ouvert vers le bas délimité à l'arrière par une tranche (8b) verticale ou descendant vers l'avant et à l'avant par une rampe (8c) oblique descendant vers l'avant.

2. Glissière selon la revendication 1, caractérisée en ce que les moyens d'asservissement des déplacements angulaires du basculeur (10) aux rabattements du dossier (4) comprennent un câble inextensible (12) dont les deux extrémités sont accrochées respectivement à ce basculeur et à ce dossier.

3. Siège de véhicule, caractérisé en ce qu'il est équipé d'une glissière selon l'une quelconque des précédentes revendications.

4. Siège selon la revendication 3, caractérisé en ce qu'il comprend des moyens élastiques (14) pour solliciter angulairement son dossier (4) vers sa position angulairement rabattue vers l'avant, lesdits moyens étant associés au mécanisme d'articulation du dossier de façon à intervenir uniquement lors des débrayages de ce mécanisme.

## Claims

1. A vehicle seat slide comprising:
a stationary longitudinal rail (3);
a moving longitudinal rail (2) slidably mounted on the stationary rail;
a rack of notches (3a) carried by the stationary rail;
a latch (5) mounted to pivot about a first transverse horizontal axis (A) tied to the moving rail and suitable for co-operating with the notches of the stationary rail under the control of a member that is easily accessible for a person sitting on the seat;
resilient means (6) for continuously urging the latch towards a notch-engaging locking position;
a longitudinal notched bar (7) secured to the stationary rail;
a shoe (8) slidably mounted to slide along the bar;
a catch (9) for locking the shoe and mounted to pivot about a second transverse horizontal axis (B) tied to the shoe and suitable for optionally co-operating with the notches (7a) of the bar so as to optionally lock the shoe relative to the bar, said catch including a top hook (9a) that is open horizontally facing towards the front of the seat;
a rocker (10) pivotally mounted about a third transverse horizontal axis (C) tied to the moving rail, which rocker includes a first transverse finger (10a) organized to co-operate with the rear end (8a) of the shoe, a second transverse finger (10b) suitable for co-operating with the hook of the catch, and a heel (10c) suitable for co-operating with the latch; and
resilient means (11) for constantly urging the rocker in a first direction towards a first extreme angular position in which firstly the first finger (10a) is in a low position for horizontally entraining the shoe, secondly the second finger (10b) raises the hook of the locking catch of the shoe into its release position, and finally the heel (10c) permits the latch to cooperate with its notches;
the slide being characterized in that it further comprises servo-control means (12) for causing forward folding down of the seat back (4) to urge the rocker (10) angularly in the opposite direction to the first above-defined direction, and in that the rear portion (8a) of its shoe (8) suitable for co-operating with the first finger (10a) of the rocker has a downwardly-open V-shaped profile in a longitudinal vertical plane, which profile is rearwardly defined by an edge (8b) which is vertical or which slopes downwards in a forwards direction, and is forwardly defined by a sloping ramp (8c) that extends downwards in a forwards direction.

2. A slide according to claim 1, characterized in that the servo-control means for controlling the angular displacements of the rocker (10) as a function of the folding down of the seat back (4) comprise an inextensible cable (12) whose two ends are connected respectively to the rocker and to the seat back.

3. A vehicle seat, characterized in that it is fitted with a slide according to any preceding claim.

4. A seat according to claim 3, characterized in that it comprises resilient means (14) for angularly urging its back (4) into its position in which it is folded down angularly forwards, said means being associated with the hinge mechanism of the seat back so as to intervene only when said mechanism is disengaged.

## Patentansprüche

1. Gleitschiene für Fahrzeugsitze mit:
einem festen Längsprofil (3); einem beweglichen Längsprofil (2), das auf dem festen Profil gleitend angeordnet ist; mehreren Einkerbungen (3a) im festen Profil; einem um eine erste horizontale Querachse (A) drehbaren Riegel (5), der mit dem beweglichen Profil verbunden ist und durch Betätigung eines für die auf dem Sitz sitzende Person leicht zugänglichen Teiles mit den Einkerbungen des festen Profils zusammenwirkt; elastischen Elementen (6), um den Riegel ständig in seiner eingerasteten Verschlußposition zu belasten; einem mit Einkerbungen versehenen Längssteg (7), der mit dem festen Profil fest verbunden ist; einem auf dem Steg gleitend befestigten Schlitten (8); einer um eine zweite horizontale Querachse (B) drehbar gelagerten Blockierfalle (9) des Schlittens, die mit dem Schlitten verbunden ist und mit den Einkerbungen (7a) des Stegs so zusammenwirkt oder nicht, daß sie den Schlitten auf dem Steg festsetzt oder nicht, wobei die Blockierfalle eine obere horizontal nach vorn weisende Zunge aufweist; einem drehbar um eine dritte horizontale Querachse (C) gelagerten Kipper (10), der mit dem beweglichen Profil verbunden ist, wobei der Kipper einen ersten Querzapfen (10a) aufweist, der mit dem hinteren Endstück (8a) des Schlittens zusammenwirkt, einen zweiten Querzapfen (10b), der mit der Zunge der Blockierfalle zusammenwirkt und einen Absatz (10c), der mit dem Riegel (5) zusammenwirkt; elastischen Elementen (11), die den Kipper in eine erste Richtung in eine erste abgewinkelte Endposition drücken, in der einerseits der erste Zapfen (10a) sich in einer unteren horizontalen Mitnahmeposition des Schlittens befindet, andererseits der zweite Zapfen (10b) die Zunge der Blockierfalle des Schlittens in eine Entriegelungsposition aufhebt, und schließlich der Absatz (10c) es dem Riegel ermöglicht, mit den Einkerbungen zusammenzuwirken,
gekennzeichnet durch
Vorrichtungen (12) zum Umklappen der Sitzlehne (4) nach vorne bei einer Schwenkbewegung des Kippers (10) in eine oben definierte entgegengesetzte Richtung, wobei das Endstück (8a) des Schlittens mit dem ersten Zapfen (10a) des vorliegenden Kippers in einer vertikalen Längsebene zusammenwirkt, und eine nach unten offene V-Kontur hat, die hinten durch einen vertikalen oder nach vorne abfallenden Bereich und vorne durch eine nach vorne abfallende Abschrägung (8c) begrenzt ist.

2. Gleitschiene nach Anspruch 1, dadurch gekennzeichnet, daß die Betätigungsvorrichtungen für die Schwenkbewegungen des Kippers zum Herunterklappen der Lehne (4) einen nicht dehnbaren Strang (12) aufweisen, dessen Enden jeweils mit dem Kipper und der Lehne verbunden sind.

3. Fahrzeugsitz, gekennzeichnet durch eine Gleitschiene nach einem der vorherigen Ansprüche.

4. Sitz nach Anspruch 3, gekennzeichnet durch elastische Vorrichtungen (14), die die Lehne (4) in ihrer nach vorne abgewinkelten Position im Winkel belasten, und mit dem Gelenkmechanismus der Lehne so verbunden sind, daß sie nur während Entkopplungen des Mechanismus arbeiten.
